# EUROPEAN PATENT APPLICATION

(11) **EP 4 102 361 A2**
(43) Date of publication of application: **14.12.2022**
(21) Application number: 22186815.1
(22) Date of filing: 26.07.2022
(51) Int. Cl.: G06F 9/445

(54) **METHOD AND APPARATUS FOR MANAGING FUNCTIONS OF A QUERY ENGINE**

(30) Priority: 26.07.2021 CN 202110846175
(71) Applicant: BEIJING BAIDU NETCOM SCIENCE TECHNOLOGY CO., LTD., Beijing 100085 (CN)
(72) Inventor: HE, Bin, Beijing, 100085 (CN)
(74) Representative: Maiwald GmbH

(57) **Abstract**

Disclosed are a method for managing a function based on an engine, an electronic device and a medium, which relate to a field of computer technologies, and particularly to a field of artificial intelligence (AI) technologies such as cloud computing, big data and deep learning. The technical solution includes: generating (101) a function creating request, in which the function creating request comprises Java Archive File (JAR) package path information; sending the function creating request to a coordinate machine node of the engine; obtaining (102), by the coordinate machine node based on the JAR package path information, a JAR package; copying (103) the JAR package to a plug-in directory corresponding to each worker node of at least one worker node of the engine; and performing (104), by a daemon thread, registration and loading of a function corresponding to the JAR package in the plug-in directory.

## Description

### TECHNICAL FIELD

The disclosure relates to a field of computer technologies, particularly to a field of artificial intelligence (AI) technologies such as cloud computing, big data and deep learning, and specifically to a method and an apparatus for managing a function based on an engine, an electronic device and a storage medium.

### BACKGROUND

Presto engine, as an open-source distributed SQL (Structured Query Language) query engine, has a query speed reaching a level of business data warehouse. It is a better way to improve a data query efficiency by performing the data query in a data source with a performance of Presto engine.

### SUMMARY

The disclosure provides a method and an apparatus for managing a function based on an engine, an electronic device and a storage medium.

According to an aspect of the disclosure, a method for managing a function based on an engine is provided, and includes: generating a function creating request, in which the function creating request comprises Java Archive File (JAR) package path information; sending the function creating request to a coordinate machine node of the engine; obtaining, by the coordinate machine node based on the JAR package path information, a JAR package; copying the JAR package to a plug-in directory corresponding to each worker node of at least one worker node of the engine; and performing, by a daemon thread, registration and loading of a function corresponding to the JAR package in the plug-in directory.

Optionally, the function creating request further includes file system path information, and copying the JAR package to the plug-in directory corresponding to each worker node of the at least one worker node of the engine includes: sending (301), by the coordinate machine node based on the file system path information, the JAR package to a file system; sending a JAR package synchronous request to the at least one worker node, in which the JAR package synchronous request includes the file system path information; and copying, by the at least one worker node based on the file system path information, the JAR package from the file system to the plug-in directory corresponding to each worker node of the at least one worker node.

Optionally, generating the function creating request includes: receiving a configuration request sent by a user, in which the configuration request includes a first instruction of adding the JAR package path information and a second instruction of setting the file system path information; configuring the coordinate machine node based on the first instruction and the second instruction; and generating the function creating request based on a completion of the configuring.

Optionally, the daemon thread is created by: obtaining a plug-in manager class file; extracting a plug-in loading method function from the plug-in manager class file; and creating the daemon thread corresponding to the plug-in loading method function.

Optionally, performing, by the daemon thread, registration and loading of the function corresponding to the JAR package in the plug-in directory includes: starting the daemon thread; and calling, by the daemon thread, the plug-in loading method function to perform registration and loading of the function corresponding to the JAR package in the plug-in directory.

Optionally, a service of the engine includes the daemon thread.

According to another aspect of the disclosure, an apparatus for managing a function based on an engine is provided, and includes: a generating module, configured to generate a function creating request and send the function creating request to a coordinate machine node of the engine, in which the function creating request comprises Java Archive File (JAR) package path information; an obtaining module, configured to obtain, by the coordinate machine node based on the JAR package path information, a JAR package; a copying module, configured to copy the JAR package to a plug-in directory corresponding to each worker node of at least one worker node of the engine; and a managing module, configured to perform, by a daemon thread, registration and loading of a function corresponding to the JAR package in the plug-in directory.

Optionally, the function creating request further includes file system path information, and the copying module is configured to: send, by the coordinate machine node based on the file system path information, the JAR package to a file system; send a JAR package synchronous request to the at least one worker node, in which the JAR package synchronous request includes the file system path information; and copy, by the at least one worker node based on the file system path information, the JAR package from the file system to the plug-in directory corresponding to each worker node of the at least one worker node.

Optionally, the generating module is configured to: receive a configuration request sent by a user, in which the configuration request includes a first instruction of adding the JAR package path information and a second instruction of setting the file system path information; configure the coordinate machine node based on the first instruction and the second instruction; and generate the function creating request based on a configuration result.

Optionally, the managing module creates the daemon thread by: obtaining a plug-in manager class file; extracting a plug-in loading method function from the plug-in manager class file; and creating the daemon thread corresponding to the plug-in loading method function.

Optionally, the managing module is configured to: start the daemon thread; and call, by the daemon thread, the plug-in loading method function to perform registration and loading of the function corresponding to the JAR package in the plug-in directory.

Optionally, a service of the engine includes the daemon thread.

According to another aspect of the disclosure, an electronic device is provided, and includes: at least one processor; and a memory communicatively connected to the at least one processor; the memory is stored with instructions executable by the at least one processor, the instructions are performed by the at least one processor, to cause the at least one processor to perform the method as described in the above embodiments.

According to another aspect of the disclosure, a non-transitory computer readable storage medium stored with computer instructions is provided, the computer instructions are configured to cause a computer to perform the method as described in the above embodiments by the computer.

It should be understood that, the content described in the part is not intended to recognize key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart of a method for managing a function based on an engine according to an embodiment of the disclosure;
FIG. 2 is a schematic sequence diagram of a method for managing a function based on an engine according to an embodiment of the disclosure;
FIG. 3 is a flowchart of another method for managing a function based on an engine according to an embodiment of the disclosure;
FIG. 4 is a flowchart of another method for managing a function based on an engine according to an embodiment of the disclosure;
FIG. 5 is a flowchart of another method for managing a function based on an engine according to an embodiment of the disclosure;
FIG. 6 is a flowchart of another method for managing a function based on an engine according to an embodiment of the disclosure;
FIG. 7 is a block diagram of an apparatus for managing a function based on an engine according to an embodiment of the disclosure;
FIG. 8 is a block diagram of an electronic device configured to implement a method for managing a function based on an engine according to an embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope of the present disclosure. Similarly, for clarity and conciseness, descriptions of well-known functions and structures are omitted in the following descriptions.

In related arts, before the Presto engine uses a user defined function (UDF) function, a registration needs to be performed when starting a Presto service, such that the function can be called when performing a SQL query. That is, once one UDF function is added, the service needs to be closed, and then the UDF function is registered by restarting the service.

A method and an apparatus for managing a function based on an engine, an electronic device and a storage medium in the embodiment of the disclosure are described below with reference to the accompanying drawings.

According to the method and apparatus for managing a function based on an engine, a mechanism of dynamically loading the function can be realized, such that convenience and quickness of data analysis can be improved. Further, an abuse in the related art that the service of the engine needs to be restarted to register the function is solved.

Deep Learning (DL), a new research direction in the field of Machine Learning (ML). DL is a process of learning inherent laws and representation hierarchy of sample data, and information obtained from the learning process can be of great help in interpretation of data such as text, images and sounds. The ultimate goal is to enable machines to have analytical learning capabilities like humans, capable of recognizing data such as text, images and sounds. DL is a complex machine learning algorithm that has achieved results in speech and image recognition that far surpass the previous related art.

Cloud computing, a kind of distributed computing, refers to decomposing a huge data computing and processing program into a plurality of small programs through a network "cloud" and then processing and analyzing the small programs through a system composing of a plurality of servers to obtain and return results of the small programs to the user. At early stage, the cloud computing is a simple distributed computing which may achieve distribution of tasks and perform merging of computation results. Thus, the cloud computing is also referred as to network computing. Through this technology, processing of tens of thousands of data can be realized within a short time period (few seconds), such that a strong network service can be achieved. The cloud service at this stage is not only a distributed computing, but is a hybrid evolution and advancement of computer technologies such as distributed computing, utility computing, loads balancing, parallel computing, network storage, hot backup redundancy and virtualization.

Big data, a term in the IT industry, refers to a data set that cannot be captured, managed and processed with conventional software tools within a certain time period, which is a massive and diversified information asset having high rate of growth that requires a new processing model to have high decision-making power, insight and discovery, and process optimization capabilities. A strategic importance of the big data is not in controlling huge data information but in performing specialized processing on the meaningful data. In other words, if the big data is compared to an industry, a key point that the industry achieves profitability is to improve a processing capability of data and achieve value-adding of data through processing.

Artificial intelligence (AI) is a subject that learns how a computer simulates certain thinking processes and intelligent behaviors (such as learning, reasoning, thinking, planning, etc.) of human beings, which covers hardware-level technologies and software-level technologies. AI hardware technologies generally include technologies such as sensor, dedicated AI chip, cloud computing, distributed storage, big data processing, etc.; AI software technologies include computer vision technology, speech recognition technology, natural language processing (NLP) technology, deep learning (DL), big data processing technology, knowledge graph technology, etc.

The method for managing a function based on an engine provided in the embodiments of the disclosure may be executed by an electronic device. The electronic device may be a personal computer, a tablet computer, a phone or a server, which is not limited herein.

In the embodiments of the disclosure, the electronic device may be configured with a processing component, a storage component, and a driver component. Alternatively, the driver component and the processing component may be set integrally. The storage component may be configured to store an operating system, application programs or other program modules. The processing component is configured to perform the method for managing a function based on an engine according to the embodiment of the disclosure by executing application programs stored in the storage component.

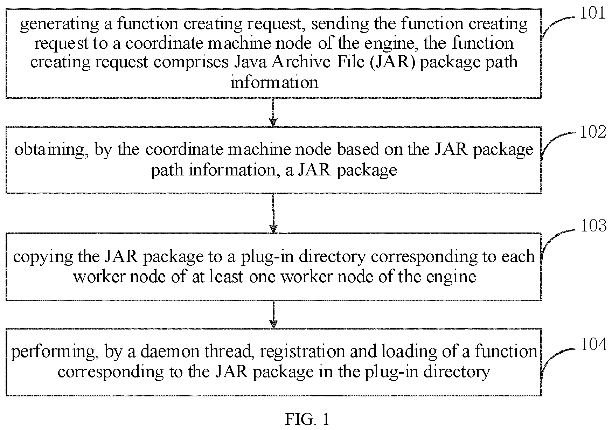

FIG. 1 is a flowchart of a method for managing a function based on an engine according to an embodiment of the disclosure.

The method for managing a function based on an engine according to the embodiment may be performed by an apparatus for managing a function based on an engine according to an embodiment. The apparatus may be configured in an electronic device to implement generating a function creating request, sending the function creating request to a coordinate machine node of the engine, obtaining a Java Archive File (JAR) package by the coordinate machine node based on JAR package path information, copying the JAR package to a plug-in directory corresponding to each worker node of at least one worker node of the engine, and performing, by a daemon thread, registration and loading of a function corresponding to the JAR package in the plug-in directory, such that convenience and quickness of data analysis are improved.

As a possible situation, the method for managing a function based on an engine according to the embodiment may be performed at a server side. The server may be a cloud server, so as to perform the method for managing a function based on an engine at the cloud side.

As illustrated in FIG. 1, the method for managing a function based on an engine includes the followings.

At block 101, a function creating request is generated and sent to a coordinate machine node of the engine. The function creating request includes JAR package path information.

It should be noted that, the JAR package described in the embodiment is a document with an extension name of ".JAR". The document with the extension name of ".JAR" is not only used for compression and release of a library, components and plug-in programs, but also used for deployment and package of the library, components and plug-in programs, and can be directly used by some compiler tools. In addition, the JAR package described in the embodiment can be a JAR package of a function (for example, a user defined function).

In the embodiments of the disclosure, the above mentioned function creating request may be generated by a server end of the engine, for example, the server end generates the function creating request after receiving a configuration request sent by a user through a client of the engine.

It should be noted that, the server end of the engine described in the embodiment may be mounted (set) in a server, such as a cloud server. As a possible implementation, the server end of the engine may be mounted (set) in a PC computer, a tablet computer or other electronic devices.

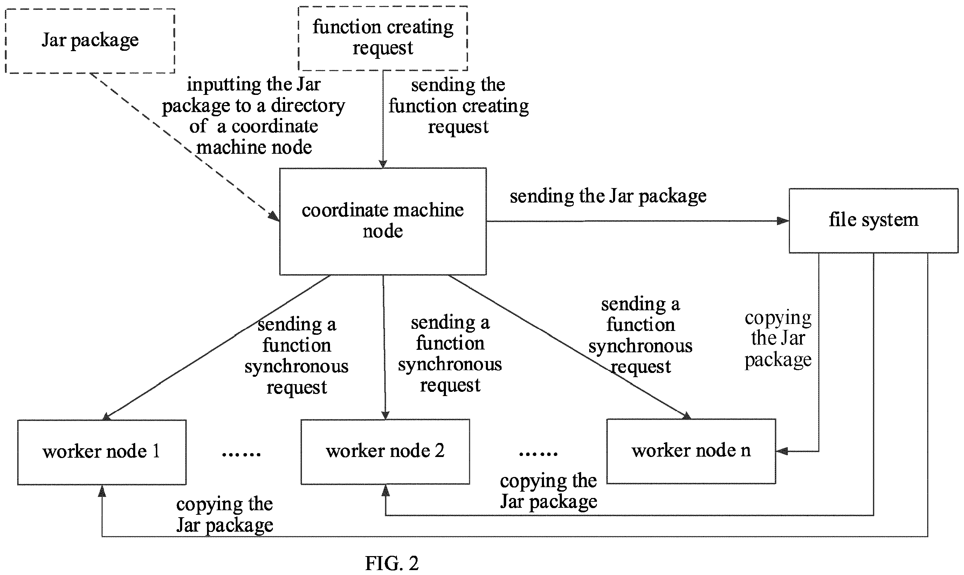

In detail, with reference to FIG. 2, after the server generates the above mentioned function creating request through a built-in engine (for example the sever end of the engine), the server may send the function creating request to the coordinate machine node of the engine.

It should be noted that, the engine described in the embodiment may be a Presto engine. The coordinate machine node described in the embodiment may be a coordinator (i.e., a coordinate machine) in the Presto engine. There may be multiple coordinators. The Presto engine may be a distributed query engine, which uses a master-slave model. The coordinator may be responsible for metadata management, worker node management, request analysis and scheduling or the like.

At block 102, a JAR package is obtained by the coordinate machine node based on the JAR package path information.

In detail, the coordinate machine node of the engine may parse the function creating request to obtain the JAR package path information in the function creating request after receiving the function creating request sent by the engine (for example, the server end of the engine), and obtain the JAR package based on the JAR package path information. The JAR package path information may be "/xxx/xx/xxx.jar", which may be an address of a text directory where the JAR package is located. It should be noted that, the text directory described in the embodiment may be a directory of the coordinate machine node.

In the embodiments of the disclosure, the user (for example, a related worker) may upload a JAR package of a developed function to a directory of the coordinate machine node. For example, as illustrated in FIG. 2, the user may upload the JAR package of the developed function to one directory of the coordinate machine node through the client of the engine, or may upload the JAR package of the developed function to one directory of the coordinate machine node through other ways, which is not limited herein.

It should be noted that, the function described in the embodiment may be a UDF function. The UDF function may be developed and defined by the related worker according to his own requirements, and the JAR package of the developed UDF function is completed after the development, so that the UDF function can be registered and loaded. The UDF function may be a function that can be registered and loaded by the Presto engine. The Presto engine may classify functions into a scalar function (which performs computation with one or more parameters passed to it and returns one scalar value of a determined type), an aggregation function (which performs computation with an array of values and returns a single value), a window function (which performs with an array of values and returns multiple values) and so on. For the above three kinds of functions, different rules are required.

At block 103, the JRA package is copied to a plug-in directory corresponding to each worker node of at least one worker node of the engine.

It should be noted that, the worker node descried in the embodiment may be responsible for computation, reading and writing in the engine, and each worker node may have a plug-in directory.

In detail, after the coordinate machine node of the engine obtains the JAR package, the server may copy the JAR package to the plug-in directory corresponding to each worker node of at least one worker node of the engine through the server end of the engine.

At block 104, registration and loading of a function corresponding to the JAR package in the plug-in directory are performed by a daemon thread. The daemon thread is calibrated according to actual situations.

In detail, after the server copies the JAR package to the plug-in directory corresponding to each worker node of the at least one worker node of the engine through the server end of the engine, the daemon thread may be started (waken) to perform registration and loading of the function corresponding to the JAR package in the plug-in thread through the daemon thread.

In the embodiment of the disclosure, the function creating request is generated and sent to the coordinate machine node of the engine. The function creating request includes the JAR package path information. The coordinate machine node obtains the JAR package based on the JAR package path information. The JAR package is copied to the plug-in directory corresponding to each worker node of at least one worker node of the engine, and the registration and loading of the function corresponding to the JAR package in the plug-in directory may be performed by the daemon thread. In this way, a mechanism of dynamically loading the function can be realized, such that convenience and quickness of data analysis can be improved.

In order to illustrate the above embodiment clearly, in an embodiment of the disclosure, the service of the engine may include the daemon thread.

In an embodiment of the disclosure, the daemon thread may be bound to the service of the engine, i.e., a method function called by the daemon thread belongs to a class provided by the service of the engine.

In detail, the server may start (waken) the daemon thread by starting the service of the engine. The registration and loading of the function corresponding to the JAR package in the plug-in directory may be performed in the method function called by the daemon thread. In this way, when the service of the engine is in a started state, the daemon thread may continuously call the related method function to realize the registration and loading of the function, such that an abuse in the related art that the service of the engine needs to be restarted to register the function is solved.

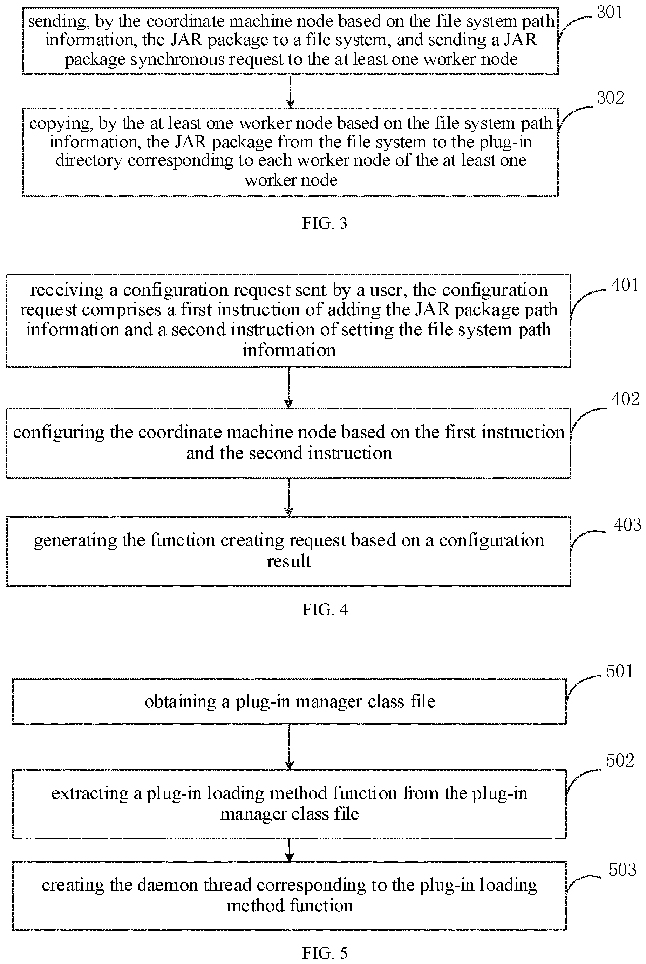

Further, in an embodiment of the disclosure, as illustrated in FIG. 3, the function creating request further includes file system path information. Copying the JAR package to the plug-in directory corresponding to each worker node of at least one worker node of the engine may include the followings.

At block 301, the JAR package is sent to a file system by the coordinate machine node based on the file system path information, and a JAR package synchronous request is sent to the at least one worker node. The JAR package synchronous request includes the file system path information.

It should be noted that, the file system described in the embodiment may be a Hadoop distributed file system (HDFS for short). The HDFS has many common characteristics with an existing distributed file system, also the HDFS has some significant characteristics different from the existing distributed file system. The HDFS is a system with a highly fault toleration, and is adapted to be deployed in a cheap machine. The HDFS may provide high throughout data access, so that it is suitable to applications on large scale of data sets.

Further, the file system described in the embodiment may be mounted in the same server as the server end of the engine, or mounted in another server. A communication network connection is established between the file system and the server end of the engine, in order to perform a data transmission.

In the embodiments of the disclosure, during a process that the coordinate machine node of the engine parses the function creating request, the file system path information in the function creating request can be obtained by the coordinate machine node.

In detail, with reference to FIG. 2, after the engine (the server end of the engine) in the server obtains the JAR package through the coordinate machine node based on the JAR package path information, the engine may send the JAR package to the file system based on the file system path information, and meanwhile generates the JAR package synchronous request based on the file system path information and sends the JAR package synchronous request to the worker node.

At block 302, the JAR package is copied by the at least one worker node based on the file system path information from the file system to the plug-in directory corresponding to each worker node in the at least one worker node.

In detail, as illustrated in FIG. 2, after the worker node (for example, worker node 1, worker node 2... worker node n) receives the JAR package synchronous request, the engine in the server may parse the JAR package synchronous request through the worker node to obtain the file system path information in the JAR package synchronous request, and copies the JAR package from the file system to the plug-in directory corresponding to the worker node through the worker node based on the file system path information. In this way, the JAR package may be included in the plug-in directory corresponding to each worker node, such that the operation cost is reduced greatly, thus improving the user experience.

It should be noted that, in order to ensure that the function can be used, it should be guaranteed that the plug-in directory corresponding to each worker node has the JAR package, so that when each worker node performs computation, the function can be loaded for usage.

In an embodiment of the disclosure, as illustrated in FIG. 4, generating the function creating request may include the followings.

At block 401, a configuration request sent by a user is received. The configuration request includes an instruction of adding the JAR package path information and an instruction of setting the file system path information.

In the embodiment of the disclosure, the user may send the configuration request through the client of the engine. The client of the engine may be mounted in a PC computer, a phone, a tablet computer or other electronic devices. In addition, the client of the engine may provide a configuration request generating interface, the user may enter information according to requirements, to send the configuration request meeting the requirements.

It should be noted that, the instruction of adding the JAR package path information described in the above embodiment may include instruction information "add jar /xxx/xx/xxx.jar". The instruction of setting the file system path information described in the above embodiment may include instruction information:
<property>
<name>fs.XXXXXXFS</name>
<value>hdfs://1XX. 18.XX.2: XXXX</value>
</property>

At block 402, the coordinate machine node is configured based on the instruction of adding the JAR package path information and the instruction of setting the file system path information.

At block 403, the function creating request is generated based on a configuration result.

In detail, the user may send the configuration request to the server end of the engine in the server through the client of the engine. After the server end of the engine receives the configuration request, the server end parses the configuration request to obtain the instruction of adding the JAR package path information and the instruction of setting the file system path information from the configuration request, configures the coordinate machine node based on the instruction of adding the JAR package path information and the instruction of setting the file system path information, and generates the function creating request based on the configuration result. In this way, the coordinate machine node may access the file system and know that the JAR package has been added to the coordinate machine node, so as to provide service guarantee for subsequent operations.

In an embodiment of the disclosure, as illustrated in FIG. 5, the daemon thread may be created as follows.

At block 501, a plug-in manager class file is obtained.

It should be noted that, the plug-in manager class file (pluginManager) described in the embodiment may be a class file in the engine, i.e., the plug-in manager class file may be stored in a storage space of the engine in the server.

At block 502, a plug-in loading method function is extracted from the plug-in manager class file.

It should be noted that, the plug-in loading method function (loadplugin) described in the embodiment may be configured to perform registration and loading of different kinds of functions (for example, the above mentioned scalar function, the aggregation function, the window function and so on).

At block 503, the daemon thread corresponding to the plug-in loading method function is created.

In detail, the engine in the server may obtain (call) the plug-in manager class file from its own storage space, extract the plug-in loading method function from the plug-in manager class file and create the daemon thread corresponding to the plug-in loading method function based on a preset thread creating method. The preset thread creating method may be calibrated according to actual situations. In this way, the daemon thread performs the registration and loading of the function, such that an abuse in the related art that the service of the engine needs to be restarted to register the function is solved, and the speed is fast.

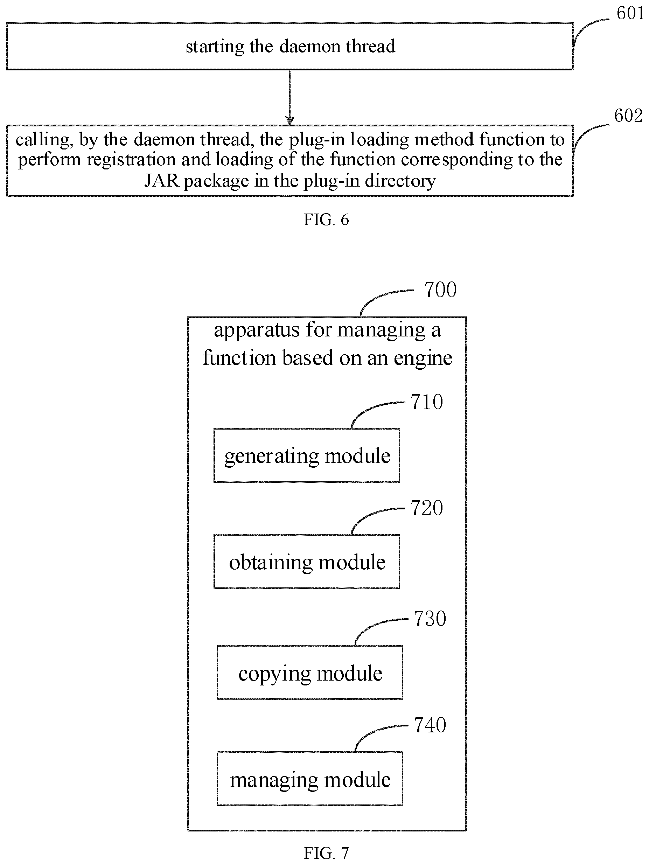

Further, in an embodiment of the disclosure, as illustrated in FIG. 6, performing registration and loading of the function corresponding to the JAR package in the plug-in directory through the daemon thread may include the followings.

At block 601, the daemon thread is started.

In the embodiment of the disclosure, the daemon thread can be started by starting the service of the engine, and the daemon thread may be closed by closing the service of the engine. In other words, the daemon thread is bound to the service of the engine.

At block 602, the plug-in loading method function is called by the daemon thread to perform the registration and loading of the function corresponding to the JAR package in the plug-in directory.

In detail, after the engine in the server copies the JAR package from the file system to the plug-in directory corresponding to each worker node of the at least one worker node through the at least one worker node based on the file system path information, the engine may call the daemon thread in the service of the engine, to call the plug-in loading method function through the daemon thread o perform the registration and loading of the function corresponding to the JAR package in the plug-in directory. In this way, an abuse in the related art that the service of the engine needs to be restarted to register the function is solved, and convenience and quickness of data analysis are improved greatly.

As a possible case, the above daemon thread exists as a plug-in. The plug-in is installed in the engine (the server end of the engine), and the plug-in may control starting or closing of the daemon thread by determining whether a function (UDF function) is stored in the above plug-in directory.

According to the method for managing a function based on an engine in the embodiments of the disclosure, the function creating request is generated and sent to the coordinate machine node of the engine. The function creating request includes the JAR package path information. The coordinate machine node obtains the JAR package based on the JAR package path information. The JAR package is copied to the plug-in directory corresponding to each worker node of at least one worker node of the engine, and the registration and loading of the function corresponding to the JAR package in the plug-in directory may be performed by the daemon thread. In this way, a mechanism of dynamically loading the function can be realized, such that convenience and quickness of data analysis can be improved.

FIG. 7 is a block diagram of an apparatus for managing a function based on an engine according to an embodiment of the disclosure.

The apparatus may be configured in an electronic device to implement generating a function creating request, sending the function creating request to a coordinate machine node of the engine, obtaining a Java Archive File (JAR) package by the coordinate machine node based on JAR package path information, copying the JAR package to a plug-in directory corresponding to each worker node of at least one worker node of the engine, and performing, by a daemon thread, registration and loading of a function corresponding to the JAR package in the plug-in directory, such that convenience and quickness of data analysis are improved.

As illustrated in FIG. 7, the apparatus 700 may include a generating module 710, an obtaining module 720, a copying module 730, and a managing module 740.

The generating module 710 is configured to generate a function creating request and send the function creating request to a coordinate machine node of the engine, in which the function creating request comprises Java Archive File (JAR) package path information.

It should be noted that, the JAR package described in the embodiment is a document with an extension name of ".JAR". The document with the extension name of ".JAR" is not only used for compression and release of a library, components and plug-in programs, but also used for deployment and package of the library, components and plug-in programs, and can be directly used by some compiler tools. In addition, the JAR package described in the embodiment can be a JAR package of a function (for example, a user defined function).

In the embodiments of the disclosure, the above mentioned function creating request may be generated by a server end of the engine, for example, the server end generates the function creating request after receiving a configuration request sent by a user through a client of the engine.

It should be noted that, the server end of the engine described in the embodiment may be mounted (set) in a server, such as a cloud server. As a possible implementation, the server end of the engine may be mounted (set) in a PC computer, a tablet computer or other electronic devices.

In detail, with reference to FIG. 2, after generating the above mentioned function creating request through a built-in engine (for example the sever end of the engine), the generating module 710 may send the function creating request to the coordinate machine node of the engine.

It should be noted that, the engine described in the embodiment may be a Presto engine. The coordinate machine node described in the embodiment may be a coordinator (i.e., a coordinate machine) in the Presto engine. There may be multiple coordinators. The Presto engine may be a distributed query engine, which uses a master-slave model. The coordinator may be responsible for metadata management, worker node management, request analysis and scheduling or the like.

The obtaining module 720 is configured to obtain, by the coordinate machine node based on the JAR package path information, a JAR package.

In detail, the obtaining module 720 may parse the function creating request through the coordinate machine node to obtain the JAR package path information in the function creating request after receiving through the coordinate machine node the function creating request sent by the engine (for example, the server end of the engine), and obtain the JAR package based on the JAR package path information. The JAR package path information may be "/xxx/xx/xxx.jar", which may be an address of a text directory where the JAR package is located. It should be noted that, the text directory described in the embodiment may be a directory of the coordinate machine node.

In the embodiments of the disclosure, the user (for example, a related worker) may upload a JAR package of a developed function to a directory of the coordinate machine node. For example, as illustrated in FIG. 2, the user may upload the JAR package of the developed function to one directory of the coordinate machine node through the client of the engine, or may upload the JAR package of the developed function to one directory of the coordinate machine node through other ways, which is not limited herein.

It should be noted that, the function described in the embodiment may be a UDF function. The UDF function may be developed and defined by the related worker according to his own requirements, and the JAR package of the developed UDF function is completed after the development, so that the UDF function can be registered and loaded. The UDF function may be a function that can be registered and loaded by the Presto engine. The Presto engine may classify functions into a scalar function (which performs computation with one or more parameters passed to it and returns one scalar value of a determined type), an aggregation function (which performs computation with an array of values and returns a single value), a window function (which performs with an array of values and returns multiple values) and so on. For the above three kinds of functions, different rules are required.

The copying module 730 is configured to copy the JAR package to a plug-in directory corresponding to each worker node of at least one worker node of the engine.

It should be noted that, the worker node descried in the embodiment may be responsible for computation, reading and writing in the engine, and each worker node may have a plug-in directory.

In detail, after the obtaining module 720 obtains the JAR package through the coordinate machine node of the engine, the copying module 730 may copy the JAR package to the plug-in directory corresponding to each worker node of at least one worker node of the engine through the server end of the engine.

The managing module 740 is configured to perform, by a daemon thread, registration and loading of a function corresponding to the JAR package in the plug-in directory.

In detail, after the copying module 730 copies the JAR package to the plug-in directory corresponding to each worker node of the at least one worker node of the engine through the server end of the engine, the managing module 740 may start (waken) the daemon thread to perform registration and loading of the function corresponding to the JAR package in the plug-in thread through the daemon thread.

In the embodiment of the disclosure, the function creating request is generated by the generating module and sent to the coordinate machine node of the engine. The function creating request includes the JAR package path information. The obtaining module obtains the JAR package based on the JAR package path information through the coordinate machine node. The copying module copies the JAR package to the plug-in directory corresponding to each worker node of at least one worker node of the engine, and the managing module performs the registration and loading of the function corresponding to the JAR package in the plug-in directory through the daemon thread. In this way, a mechanism of dynamically loading the function can be realized, such that convenience and quickness of data analysis can be improved.

In an embodiment of the disclosure, the function creating request further includes file system path information. The copying module 730 is configured to: send, by the coordinate machine node based on the file system path information, the JAR package to a file system; send a JAR package synchronous request to the at least one worker node, in which the JAR package synchronous request includes the file system path information; and copy, by the at least one worker node based on the file system path information, the JAR package from the file system to the plug-in directory corresponding to each worker node of the at least one worker node.

In an embodiment of the disclosure, the generating module 710 is configured to: receive a configuration request sent by a user, in which the configuration request includes a first instruction of adding the JAR package path information and a second instruction of setting the file system path information; obtain a configuration result of configuring the coordinate machine node based on the first instruction and the second instruction; and generate the function creating request based on the configuration result.

In an embodiment of the disclosure, the managing module 740 creates the daemon thread by obtaining a plug-in manager class file; extracting a plug-in loading method function from the plug-in manager class file; and creating the daemon thread corresponding to the plug-in loading method function.

In an embodiment of the disclosure, the managing module 740 is configured to start the daemon thread; and call, by the daemon thread, the plug-in loading method function to perform registration and loading of the function corresponding to the JAR package in the plug-in directory.

In an embodiment of the disclosure, a service of the engine comprises the daemon thread.

According to the apparatus for managing a function based on an engine in the embodiment of the disclosure, the function creating request is generated by the generating module and sent to the coordinate machine node of the engine. The function creating request includes the JAR package path information. The obtaining module obtains the JAR package based on the JAR package path information through the coordinate machine node. The copying module copies the JAR package to the plug-in directory corresponding to each worker node of at least one worker node of the engine, and the managing module performs the registration and loading of the function corresponding to the JAR package in the plug-in directory through the daemon thread. In this way, a mechanism of dynamically loading the function can be realized, such that convenience and quickness of data analysis can be improved.

In the technical solution of the disclosure, the acquisition, storage and application of user personal information are conform to the provision of related laws and regulations, without violating public order and moral.

According to the embodiment of the disclosure, an electronic device, a readable storage medium and a computer program product are further provided in the disclosure.

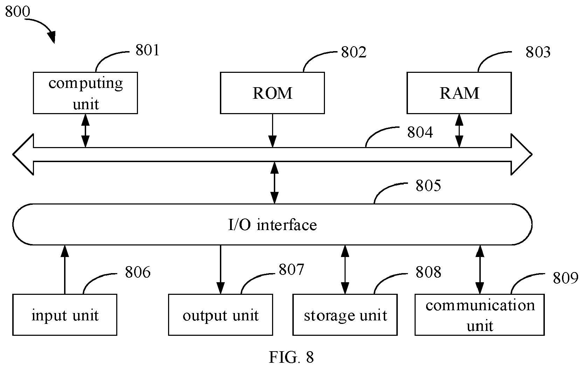

FIG. 8 is a schematic block diagram illustrating an example electronic device 800 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the device 800 includes a computing unit 801 configured to execute various appropriate actions and processings according to the computer program stored in a read-only memory (ROM) 802 or loaded from a storage unit 708 to a random access memory (RAM) 803. In the RAM 803, various programs and data required by the device 800 may be stored. The computing unit 801, the ROM 802 and the RAM 803 may be connected with each other by a bus 804. An input/output (I/O) interface 805 is also connected to the bus 804.

A plurality of components in the device 800 are connected to the I/O interface 805, and includes: an input unit 806, for example, a keyboard, a mouse, etc.; an output unit 807, for example various types of displays, speakers; a storage unit 808, for example a magnetic disk, an optical disk; and a communication unit 809, for example, a network card, a modem, a wireless transceiver. The communication unit 809 allows the device 800 to exchange information/data through a computer network such as internet and/or various types of telecommunication networks and other devices.

The computing unit 801 may be various types of general and/or dedicated processing components with processing and computing ability. Some examples of the computing unit 801 include but not limited to a central processing unit (CPU), a graphic processing unit (GPU), various dedicated artificial intelligence (AI) computing chips, various computing units running a machine learning model algorithm, a digital signal processor (DSP), and any appropriate processor, controller, microcontroller, etc. The computing unit 801 performs various methods and processings as described above, for example, a method for managing a function based on an engine. For example, in some embodiments, the method for managing a function based on an engine may be further achieved as a computer software program, which is physically contained in a machine readable medium, such as the storage unit 808. In some embodiments, a part or all of the computer program may be loaded and/or installed on the device 800 through the ROM 802 and/or a communication unit 809. When the computer program is loaded on the RAM 803 and performed by the computing unit 801, one or more blocks in the above method for managing a function based on an engine may be performed. Alternatively, in other embodiments, the computing unit 801 may be configured to perform a method for managing a function based on an engine in other appropriate ways (for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), an application specific standard product (ASSP), a system on a chip (SoC), a complex programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a RAM, a ROM, an EPROM or a flash memory, an optical fiber device, and a compact disc read-only memory(CD-ROM), an optical storage device, a magnetic storage device, or any appropriate combination thereof.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may be further configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). The examples of a communication network include a Local Area Network (LAN), a Wide Area Network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of embodiments of the present disclosure.

## Claims

1. A method for managing a function based on an engine, comprising:
generating (101) a function creating request, wherein the function creating request comprises Java Archive File, JAR, package path information;
sending (101) the function creating request to a coordinate machine node of the engine;
obtaining (102), by the coordinate machine node based on the JAR package path information, a JAR package;
copying (103) the JAR package to a plug-in directory corresponding to each worker node of at least one worker node of the engine; and
performing (104), by a daemon thread, registration and loading of a function corresponding to the JAR package in the plug-in directory.

2. The method of claim 1, wherein, the function creating request further comprises file system path information, and copying (103) the JAR package to the plug-in directory corresponding to each worker node of the at least one worker node of the engine comprises:
sending (301), by the coordinate machine node based on the file system path information, the JAR package to a file system;
sending (301) a JAR package synchronous request to the at least one worker node, wherein the JAR package synchronous request comprises the file system path information; and
copying (302), by the at least one worker node based on the file system path information, the JAR package from the file system to the plug-in directory corresponding to each worker node of the at least one worker node.

3. The method of claim 2, wherein, generating (101) the function creating request comprises:
receiving (401) a configuration request sent by a user, wherein the configuration request comprises a first instruction of adding the JAR package path information and a second instruction of setting the file system path information;
configuring (402) the coordinate machine node based on the first instruction and the second instruction; and
generating (403) the function creating request based on a completion of the configuring.

4. The method of any of claims 1-3, wherein, the daemon thread is created by:
obtaining (501) a plug-in manager class file;
extracting (502) a plug-in loading method function from the plug-in manager class file; and
creating (503) the daemon thread corresponding to the plug-in loading method function.

5. The method of claim 4, wherein, performing (104), by the daemon thread, registration and loading of the function corresponding to the JAR package in the plug-in directory comprises:
starting (601) the daemon thread; and
calling (602), by the daemon thread, the plug-in loading method function to perform registration and loading of the function corresponding to the JAR package in the plug-in directory.

6. The method of any of claims 1-5, wherein, a service of the engine comprises the daemon thread.

7. An apparatus (700) for managing a function based on an engine, comprising:
a generating module (710), configured to generate a function creating request and send the function creating request to a coordinate machine node of the engine, wherein the function creating request comprises Java Archive File, JAR, package path information;
an obtaining module (720), configured to obtain, by the coordinate machine node based on the JAR package path information, a JAR package;
a copying module (730), configured to copy the JAR package to a plug-in directory corresponding to each worker node of at least one worker node of the engine; and
a managing module (740), configured to perform, by a daemon thread, registration and loading of a function corresponding to the JAR package in the plug-in directory.

8. The apparatus (700) of claim 7, wherein, the function creating request further comprises file system path information, and the copying module (730) is configured to:
send, by the coordinate machine node based on the file system path information, the JAR package to a file system;
send a JAR package synchronous request to the at least one worker node, wherein the JAR package synchronous request comprises the file system path information; and
copy, by the at least one worker node based on the file system path information, the JAR package from the file system to the plug-in directory corresponding to each worker node of the at least one worker node.

9. The apparatus (700) of claim 8, wherein, the generating module (710) is configured to:
receive a configuration request sent by a user, wherein the configuration request comprises a first instruction of adding the JAR package path information and a second instruction of setting the file system path information;
configure the coordinate machine node based on the first instruction and the second instruction; and
generate the function creating request based on a configuration result.

10. The apparatus (700) of any of claims 7-9, wherein, the managing module (740) creates the daemon thread by:
obtaining a plug-in manager class file;
extracting a plug-in loading method function from the plug-in manager class file; and
creating the daemon thread corresponding to the plug-in loading method function.

11. The apparatus (700) of claim 10, wherein, the managing module (740) is configured to:
start the daemon thread; and
call, by the daemon thread, the plug-in loading method function to perform registration and loading of the function corresponding to the JAR package in the plug-in directory.

12. The apparatus (700) of any of claims 7-11, wherein, a service of the engine comprises the daemon thread.

13. An electronic device, comprising:
at least one processor; and
a memory communicatively connected to the at least one processor; wherein,
the memory is stored with instructions executable by the at least one processor, the instructions are performed by the at least one processor, to cause the at least one processor to perform the method of any of claims 1 to 6.

14. A non-transitory computer readable storage medium stored with computer instructions, wherein, the computer instructions are configured to cause a computer to perform the method of any of claims 1 to 6.

15. A computer program product comprising a computer program, wherein the computer program implements the method of any of claims 1 to 6 when performed by a processor.
